Europäisches Patentamt

European Patent Office

Office européen des brevets

(11) Veröffentlichungsnummer: **0 343 562 B1**

(12) **EUROPÄISCHE PATENTSCHRIFT**

(45) Veröffentlichungstag der Patentschrift: **03.03.93**

(21) Anmeldenummer: **89109170.4**

(22) Anmeldetag: **22.05.89**

Verbunden mit 89906093.3/0415989
(europäische
Anmeldenummer/Veröffentlichungsnummer)
durch Entscheidung vom 27.08.92.

(51) Int. Cl.5: **G21C 7/12**

(54) **Auswurf-Sperreinrichtung für Steuerelemente von Kernreaktoren.**

(30) Priorität: **25.05.88 DE 3817655**

(43) Veröffentlichungstag der Anmeldung:
**29.11.89 Patentblatt 89/48**

(45) Bekanntmachung des Hinweises auf die
Patenterteilung:
**03.03.93 Patentblatt 93/09**

(84) Benannte Vertragsstaaten:
**CH DE ES FR GB LI**

(56) Entgegenhaltungen:
**DE-A- 1 911 057**
**DE-B- 1 281 596**
**FR-A- 2 590 715**
**US-A- 3 408 101**

(73) Patentinhaber: **SIEMENS AKTIENGESELL-
SCHAFT**
**Wittelsbacherplatz 2**
**W-8000 München 2(DE)**

(72) Erfinder: **Hau, Gerhard**
**Sigmund-Nathan-Strasse 6**
**W-8510 Fürth(DE)**
Erfinder: **Meier, Werner. Dipl.-Ing. (FH)**
**Regensberg 20**
**W-8551 Kunreuth(DE)**
Erfinder: **Moldaschl, Helmut, Dr.**
**Kreuzstrasse 23**
**W-8524 Neunkirchen(DE)**
Erfinder: **Rau, Peter, Dipl.-Ing. (FH)**
**Mittelehrenbach 89**
**W-8551 Leutenbach(DE)**
Erfinder: **Huber, Rainer, Dipl.-Ing (FH)**
**Hohlbeinstrasse 8**
**W-8851 Kaisheim(DE)**
Erfinder: **Kautetzky, Anton, Dipl.-Ing (FH)**
**Josef-Schneider-Strasse 11**
**W-8850 Forchheim(DE)**
Erfinder: **Tschemernjak, Jörg**
**Peissenbergstrasse 13**
**W-8000 München 90(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.5x/3.0.1)

## Beschreibung

Die Erfindung bezieht sich auf eine Auswurf-Sperreinrichtung für Steuerelemente von Kernreaktoren, wie im Oberbegriff des Patentanspruchs 1 angegeben.

Eine solche Auswurf-Sperreinrichtung ist durch die DE-B 19 11 057 bekannt. In dieser Schrift ist zwar der Kernaufbau des Kernreaktors nicht näher dargestellt. Eine Übersichtsdarstellung eines Kernreaktordruckbehälters mit seinem Kernaufbau und den Steuerelementen sowie deren Antrieben ist der Druckschrift "Druckwasserreaktoren", Bestell-Nr. KWU 228, Schlüsselzahl 10 613 Ws. 11 733, insbesondere den Seiten 4 und 8, zu entnehmen.

Bei der bekannten Auswurf-Sperreinrichtung nach der vorgenannten DE-B ist in dem von der Steuerelement-Antriebsstange und dem Fingerhutrohr gebildeten Ringraum am druckbehälterseitigen Ende ein federvorgespannter Ringkolben vorgesehen. Dieser Ringkolben ist mit Sperrklinken verbunden, und im Fingerhutrohr sind Führungsflächen angeordnet, welche eine durch einen Druckunterschied zwischen dem Druckbehälterinnenraum und dem Fingerhutrohr bewirkte Axialbewegung des Ringkolbens in einer Radialbewegung der Sperrklinken bis zum Eingriff in die am Außenumfang der Antriebsstange angeordnete Verzahnung umsetzen. Diese bekannte Auswurf-Sperreinrichtung bietet im Falle eines Lecks am Fingerhutrohr bzw. an der Umschließung einen ausreichenden Schutz; bei dem hypothetischen Störfall eines Fingerhutrohr-Abrisses kann indessen der Ringkolben mit abgerissen werden, und in diesem Falle ist keine ausreichende Sicherheit gegen Ausfahren des zweiten Steuerelement-Abschnittes mit seinem Absorberteil aus dem Kern gegeben.

Der Erfindung liegt die Aufgabe zugrunde, die gattungsgemäße Auswurf-Sperreinrichtung so auszubilden, daß nicht nur bei einem Leck an der den äußeren Steuerelement-Teil umgebenden Umschließung bzw. an einem entsprechenden Fingerhutrohr, sondern auch bei einem Abriß des letzteren in jedem Falle gewährleistet ist, daß der zweite Steuerelement-Abschnitt mit seinem Absorberteil im Reaktorkern verbleibt und - wenn er noch nicht die voll eingefahrene Position eingenommen hat - in diese Position einfallen kann.

Erfindungsgemäß wird die gestellte Aufgabe bei einer Auswurf-Sperreinrichtung für Steuerelemente von Kernreaktoren gemäß Oberbegriff des Patentanspruchs 1 durch die im Kennzeichen des Anspruchs 1 angegebenen Merkmale gelöst. Vorteilhafte Weiterbildungen sind in den Patentansprüchen 2 bis 9 angegeben.

Die mit der Erfindung erzielbaren Vorteile sind vor allem darin zu sehen, daß die Sicherheit gegen Ausfahren des Absorberteils des zweiten Steuerelement-Abschnitts nun nicht mehr von der den ersten Steuerelement-Abschnitt zurückhaltenden Sperreinrichtung abhängt, weil eine Entkopplung beider Steuerelement-Abschnitte im Störfall erfolgt. Eine weitere Sicherheitsbarriere wird durch den Gegenstand des Anspruchs 4 und seine Weiterbildungen gemäß den Patentansprüchen 5 bis 8 geschaffen, indem nicht nur eine Entkopplung des ersten Steuerelement-Abschnitts vom zweiten Steuerelement-Abschnitt erfolgt, sondern der zweite Steuerelement-Abschnitt mit aus- und einlenkbaren Blockierklinken versehen ist, in deren Bewegungsbahn die oberhalb der Blockierklinken nächstgelegene Steuerelement-Führungsplatte liegt und somit als Anschlag für die Blockierklinken wirkt. Ein noch so kleiner Bewegungsimpuls, der auch den zweiten Steuerelement-Abschnitt nach oben zu beschleunigen bestrebt ist, ist damit bedeutungslos, denn der zweite Steuerelement-Abschnitt wird praktisch gleichzeitig mit dem Entkupplungs-Vorgang gegen eine Aufwärts-Bewegung blockiert, so daß - falls dieser zweite Steuerelement-Abschnitt mit seinem Absorberteil noch nicht die völlig eingefahrene Position innehatte - er nun nach unten fallen kann.

Eine besonders günstige Ausführungsform einer Auswurf-Sperreinrichtung für Steuerelemente von Kernreaktoren, die sich als Nachrüsteinrichtung eignet, ist im Patentanspruch 9 beschrieben. Bei dieser Ausführungsform wird von einer mehrfachen federelastischen Kopplung Gebrauch gemacht, welche einerseits die Beanspruchungskräfte, die auf den Steuerelement-Antrieb bei normaler Betätigung wirken, klein halten und die zum anderen in vorteilhafter Weise den Funktionsablauf für die ausfahrbaren Blockierklinken und die Auftrennung der Klauenkupplung zwischen dem ersten und dem zweiten Steuerelement-Abschnitt präzise steuern.

Im folgenden werden anhand der Zeichnung mehrere Ausführungsbeispiele der Erfindung sowie weitere Merkmale und Vorteile letzterer und die Wirkungsweise näher erläutert.

Es zeigen, teils in schematischer, vereinfachter Darstellung:

Fig. 1
einen Längsschnitt durch den Druckbehälter eines Druckwasser-Kernreaktors, woraus die prinzipielle Anordnung der Steuerelemente und ihrer Antriebe erkennbar ist. Dabei entspricht diese Fig. der Darstellung auf S. 4 der eingangs erwähnten Druckschrift "Druckwasserreaktoren";

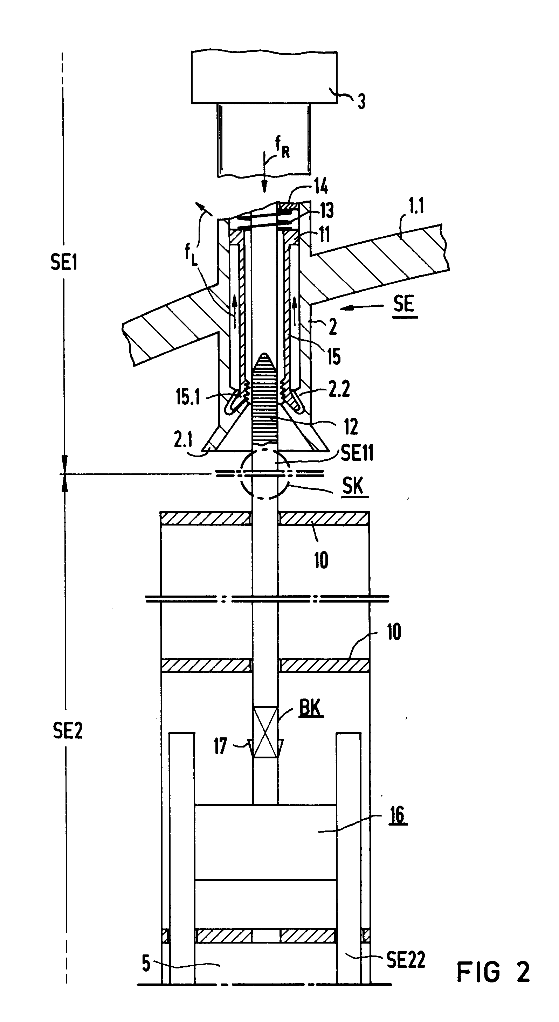

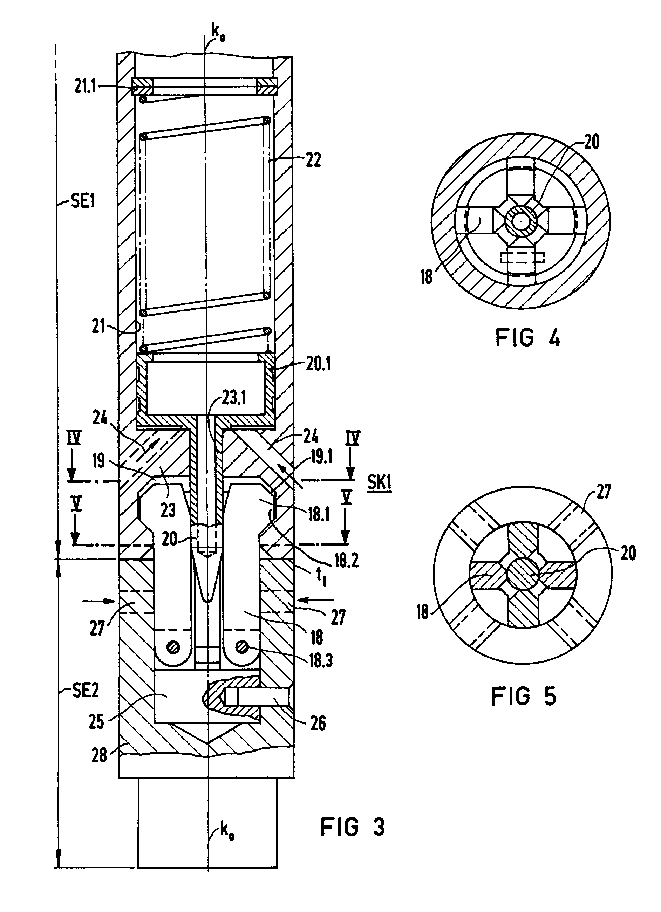

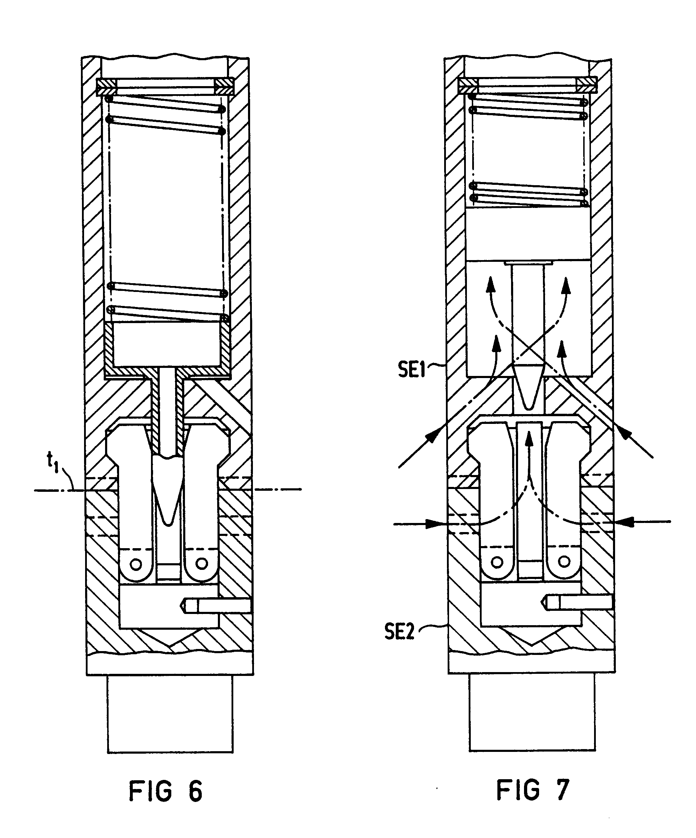

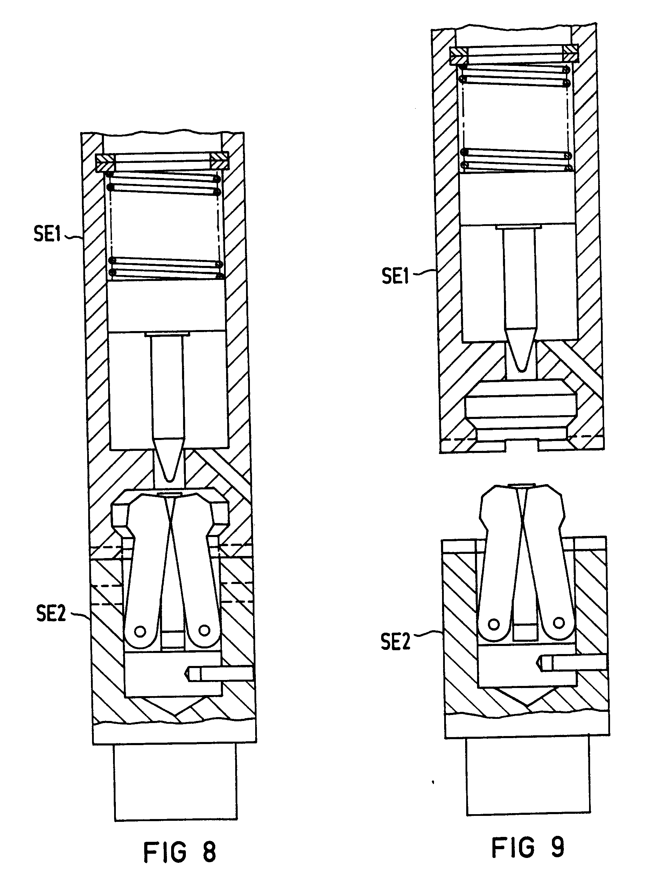

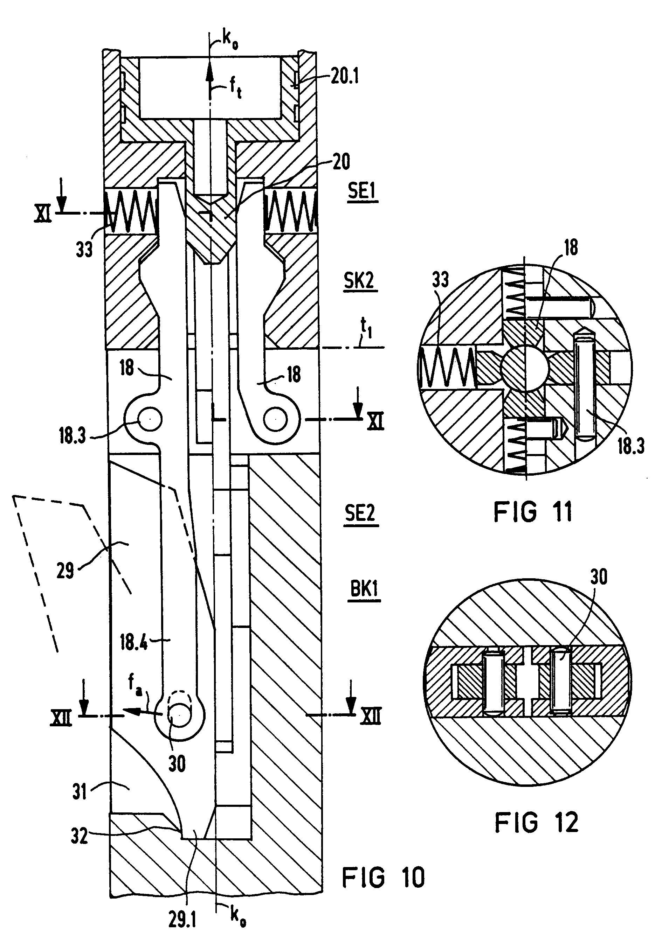

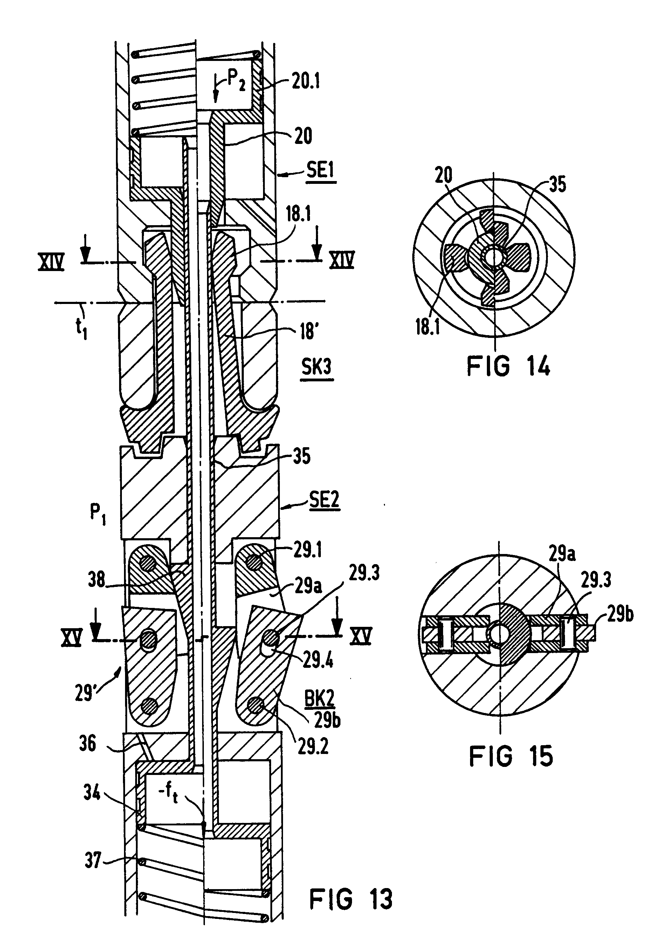

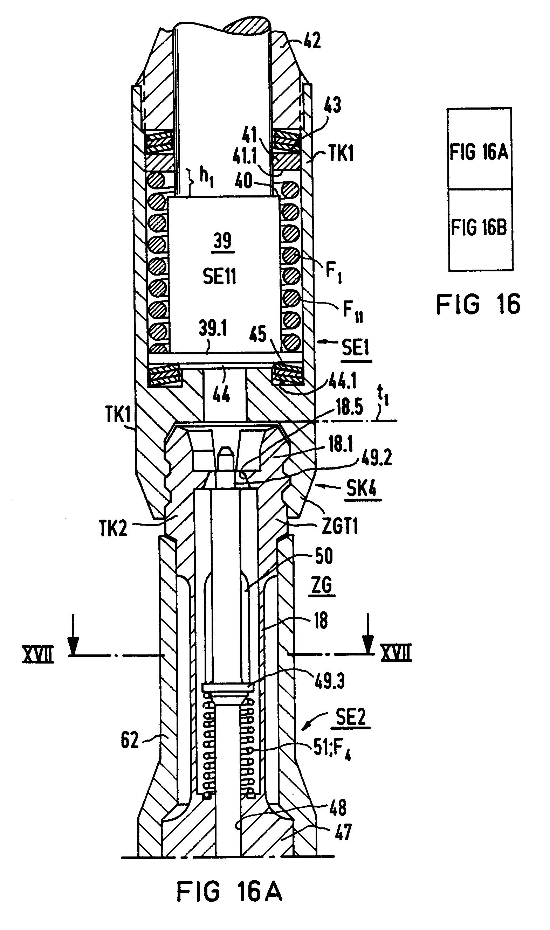

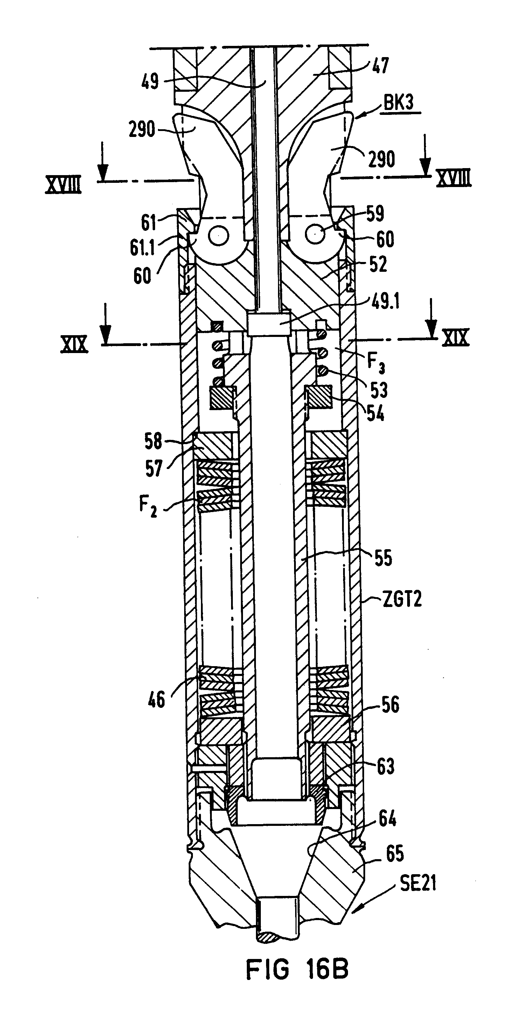

Fig. 2
stark vereinfacht eine prinzipielle Darstellung einer Auswurf-Sperreinrichtung nach der Erfindung für ein einzelnes Steuerelement, welche dreifach-redundant arbeitet, wobei die obere, im Fingerhutrohr untergebrachte Verriegelung als eine Möglichkeit zum Zurückhalten des ersten Steuerelement-Abschnitts dargestellt ist (sie entspricht derjenigen nach derDE-B 19 11 057), wobei im Bereich der Einzelheit III eine lösbare Stabkupplung, z.B. gemäß Fig. 3, angeordnet zu denken ist und der untere Steuerelement-Abschnitt zusätzlich durch Blockierklinken, welche in der anliegenden Steuerelement-Führungsplatte einen Anschlag finden, gesichert ist;
Fig. 3
als erstes Ausführungsbeispiel für die Einzelheit III nach Fig. 2 im Längsschnitt eine lösbare Stabkupplung mit Kupplungsarmen, an ihren Enden angeordneten Kupplungsklauen, einem in diese greifenden Verriegelungsstößel an einem federbelasteten Arretierkolben;
Fig. 4
den Schnitt gemäß der Schnittebene IV-IV aus Fig. 3;
Fig. 5
den Schnitt gemäß Schnittebene V-V aus Fig. 3;
Fig. 6 bis Fig. 9,
ebenfalls jeweils im Längsschnitt, einzelne Bewegungsphasen, beginnend beim gekuppelten Zustand nach Fig. 6, welcher demjenigen nach Fig. 3 entspricht, über die Entriegelungsbewegung des Arretierkolbens mit seinem Verriegelungsstößel (Fig. 7), den entriegelten Kupplungsklauen (Fig. 8) bis zu den voneinander getrennten Kupplungshälften, deren obere zum ersten Steuerelement-Abschnitt und deren untere zum zweiten Steuerelement-Abschnitt gehört;
Fig. 10
in einem Längsschnitt ein zweites Ausführungsbeispiel für eine lösbare Stabkupplung, welche mit einem Blockierklinken-Anordnung baulich und funktionell vereinigt ist;
Fig. 11
den Schnitt nach der Schnittlinie XI-XI aus Fig. 10;
Fig. 12
den Schnitt nach der Schnittebene XII-XII aus Fig. 10;
Fig. 13
ein drittes Ausführungsbeispiel für eine lösbare Stabkupplung, baulich vereinigt mit einer Blockierklinken-Anordnung, wobei letztere im Gegensatz z.B. nach Fig. 10 bis 12 nicht mechanisch, sondern hydraulisch betätigt wird, und zwar von einem gegenläufig zum Arretierkolben bewegbaren Sperrkolben;
Fig. 14
den Schnitt nach der Ebene XIV-XIV aus Fig. 13;
Fig. 15
den Schnitt nach der Ebene XV-XV aus Fig. 13;
Fig. 16
ein viertes Ausführungsbeispiel für eine lösbare Stabkupplung, diese ebenfalls baulich vereinigt mit einer Blockierklinken-Anordnung, wobei Figurenteil 16B die Verlängerung des Figurenteils 16A darstellt, in einem Längsschnitt;
Fig. 17
den Schnitt nach der Schnittebene XVII-XVII aus Fig. 16A;
Fig. 18
den Schnitt nach der Schnittebene XVIII-XVIII aus Fig. 16B durch eine Blockierklinken-Anordnung;
Fig. 19
den Schnitt nach der Schnittebene XIX-XIX aus Fig. 16B durch den zweiten Trennkörper des ersten Zwischengliedteils unterhalb eines Blockierklinkenträgers;
Fig. 20
ebenfalls im Längsschnitt den Ausschnitt der Blockierklinken-Partie aus Fig. 6, wobei jedoch die Blockierklinken ausgefahren sind;
Fig. 21 bis Fig. 24
schematisiert einzelne Momentaufnahmen bei der Auslösung der Auswurf-Sperreinrichtung nach Fig. 6, und zwar Fig. 21 den Ruhezustand, Fig. 22 die Ausführung eines Betriebsschrittes, Fig. 23 das Auslenken der Blockierklinken bei Auftreten eines Störfalls und Fig. 24 die Entriegelung der lösbaren Stabkupplung und
Fig. 25,
ebenfalls in schematischer Darstellung, eine zweckmäßige Massenverteilung für eine Auswurf-Sperreinrichtung nach Fig. 16 bis 24, wenn der zweite Steuerstab-Abschnitt eine Spinne mit mehreren Absorberblättern aufweist.

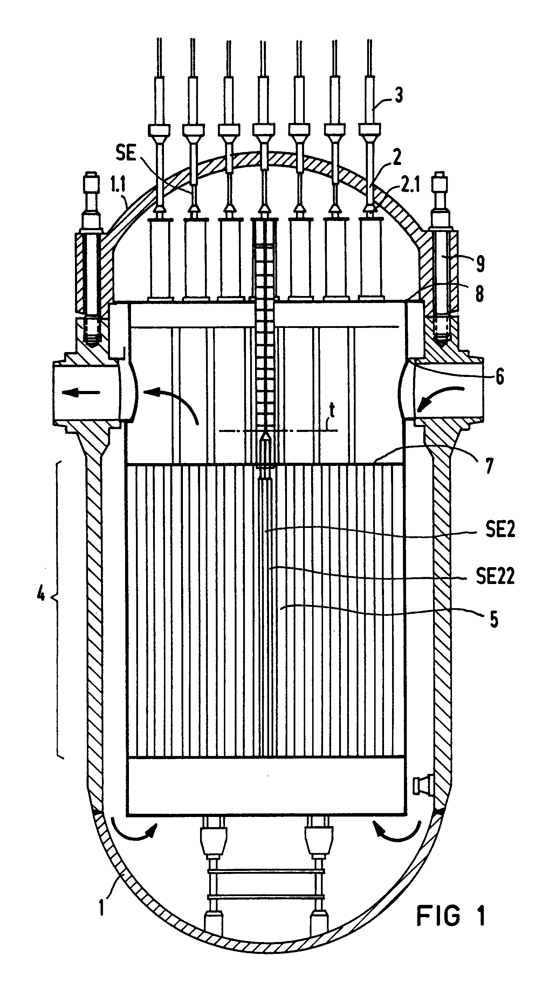

Die in Fig. 2 dargestellte Auswurf-Sperreinrichtung ist verwendbar für stangenförmige Steuerelemente, wie sie bei einem Reaktordruckbehälter 1 für Druckwasser-Kernreaktoren in Fig. 1 dargestellt sind. Die einzelnen Steuerelemente sind generell mit SE bezeichnet und sind jeweils durch eine druckdichte Durchführung in Form eines Fingerhutrohres, allgemein: einer hohlzylindrischen druckfesten Umschließung, hindurchgeführt. Dieses Fingerhutrohr 2 enthält jeweils einen Steuerantrieb 3 (nicht näher dargestellt), auch als Steuerstabantrieb bezeichnet. Eines der Steuerelemente SE ist in Fig. 1 etwas detaillierter im Schnitt dargestellt. Dort wo die horizontale strichpunktierte gedachte Trennlinie t verläuft, ist eine Stabkupplung angeordnet. Oberhalb dieser Stabkupplung befindet sich der erste Steuerstab-Abschnitt SE1 mit seinem Antriebsteil, der in Wechselwirkung mit dem Steuerantrieb 3 steht, und unterhalb der Trennlinie t befindet sich der zweite Steuerelement-Abschnitt SE2, welcher auf dem größten Teil seiner axialen Länge von dem Absorberteil (schwarz dargestellt) eingenommen wird. Dieser Absorberteil SE22 kann durch Betätigung des Steuerantriebs 3 partiell oder gänzlich in den Reaktorkern 4 eingefahren oder aus diesem Reaktorkern 4 ausgefahren werden in die zwischen den einzelnen Brennelementen 5 verbleibenden Axialkanäle. Mit 6 ist noch ein auf der oberen Gitterplatte 7 der Kerntragstruktur ruhendes Führungsgerüst bezeichnet, welches in seinem Inneren durch die Deckplatte 8 hindurchragende Führungseinsätze 9 für die einzelnen Steuerelemente SE aufnimmt. Die Führungseinsätze 9, welche in hohlzylindrische Körper eingesetzt sind, weisen in einer Vielzahl von Etagen übereinanderliegende und zueinander beabstandete Steuerelement-Führungsplatten 10 auf (vgl. Fig. 2). Die Fingerhutrohre 2, welche durch den Deckel 1.1 des Druckbehälters 1 druckdicht hindurchgeführt sind, sind an ihren inneren Enden mit konischen "Hütchen" 2.1 versehen (vgl. Fig. 2).

An den unteren Enden der Fingerhutrohre 2 können Rückhalteeinrichtungen für den stangenförmigen Antriebsteil SE11 des Steuerelementes SE angebracht sein, welche den gesamten ersten Steuerelement-Abschnitt SE1 mit seinem Antriebsteil SE11 gegen Auswerfen festhalten, wenn im Störfall eines Lecks, siehe den ein Leck andeutenden Strömungspfeil $f_L$, an der Umschließung bzw. dem Fingerhutrohr 2 außerhalb des Deckels 1.1 Druckdifferenzkräfte am ersten Steuerelement SE1 angreifen, welche dieses aus dem Druckbehälter 1 auszutreiben versuchen. In Fig. 2 ist eine Verriegelungseinrichtung entsprechend der DE-B 19 11 057 angedeutet, mit einem Ringkolben 11, der den mit einer Ringnutung 12 versehenen Antriebsteil SE11 umgreift und durch eine Schraubendruckfeder 13 in Richtung des Pfeiles $f_R$ rückstellend federbelastet ist. Mit 14 ist ein ringförmiger Anschlag für die Rückstellfeder 13 bezeichnet. An den Ringkolben 11 angewachsen sind langgestreckte fingerartige Sperrklinken 15, welche in gezahnten Klauen 15.1 enden. Letztere werden von dem konischen Mantel des Hütchens 2.1 normalerweise außer Eingriff der Ringnutung 12 gehalten; wenn jedoch im Falle eines Lecks außen am Fingerhutrohr die Druckdifferenz $p_1 - p_2$, wobei $p_1$ den Druck im Druckbehälter-Plenum bedeutet und $p_2$ den Außendruck, einen zulässigen Grenzwert überschreitet, wird der Ringkolben 11 axial entgegen der Richtung des Pfeiles $f_R$ stoßartig verschoben, und die Zahnklauen 15.1 werden durch die Schrägflächen an den Kulissen 2.2 an der Innenwand des Fingerhutrohres 2 zwangsläufig in Eingriff gebracht mit der Ringnutung 12.

In Fig. 2 ist mit 16 noch ein Spinnenteil bezeichnet, der eine Vielzahl bzw. Mehrzahl von Absorberteilen SE22 mechanisch stabil miteinander zu einer "Spinne" verbindet, die dann in die Längskanäle des darunter befindlichen Brennelementes 5 eingefahren werden. Grundsätzlich ist die Erfindung jedoch auch für Steuerelemente anwendbar, die nur einen Absorberteil aufweisen.

Zwischen dem ersten und dem zweiten Steuerelement-Abschnitt SE1 bzw. SE2 befindet sich eine generell mit SK bezeichnete lösbare Stangenkupplung, durch welche beide Abschnitte voneinander trennbar sind. Die Stangenkupplung SK wird in verschiedenen Ausführungsformen weiter unten noch erläutert. Innerhalb des zweiten Steuerelement-Abschnitts SE2 oberhalb des Spinnenteils 16 befindet sich eine Blockierklinken-Anordnung BK, deren Blockierklinken 17 im ausgefahrenen Zustand angedeutet sind, so daß bei einer möglichen Aufwärtsbewegung des zweiten Steuerelement-Abschnittes SE2 diese ausgefahrenen Blockierklinken 17 in der nächstgelegenen Steuerelement-Führungsplatte 10 einen Anschlag finden. Die auf diese Weise abgebremste Anordnung SE2 kann anschließend dann voll in den Kern einfallen und damit die sicherste Position einnehmen.

Das erste Ausführungsbeispiel einer lösbaren Stabkupplung SK1 zeigt Fig. 3 in Verbindung mit Fig. 4 und Fig. 5. Wie bereits anhand von Fig. 2 grundsätzlich dargelegt, ist der erste Steuerelement-Abschnitt SE1 mit dem zweiten Steuerelement-Abschnitt SE2 über eine lösbare Stabkupplung SK1 verbunden, welche während der normalen Stellbewegung des Steuerelementes SE in Eingriff bleibt. Die Stabkupplung SK1 ist nun mit Mitteln 18 bis 24 zum Entriegeln der Kupplungssperre versehen, welche bei Erreichen des oberen Grenzwertes des leckabhängigen Differenzdruckes $\Delta p$ oder einer dem Differenzdruck $\Delta p$ analogen Größe ansprechen und die Stabkupplung SK1 lösen, wobei der abgetrennte zweite Steuerelement-Abschnitt SE2 mit dem Absorberteil SE22 im Kern 4 (vgl. Fig. 1) verbleibt und zur Einnahme seiner voll in den Kern eingefahrenen Position freigegeben ist. Im einzelnen ist die lösbare Stabkupplung SK1 eine Klauenkupplung, mit am zweiten Steuerelement-Abschnitt SE2 radial aus- und einlenkbar gelagerten Kupplungsarmen 18, die an ihren Enden die Kupplungsklauen 18.1 aufweisen und sich achsparallel bezüglich einer zentrischen Kupplungslängsachse $k_0$-$k_0$ erstrecken. Die Kupplungklauen 18.1 greifen mit im Querschnitt insbesondere trapezförmigen Kupplungsvorsprüngen 18.2 in entsprechend geformte Rücksprünge 19.1 einer Kupplungshöhlung 19 des ersten Steuerelement-Abschnitts SE1. Die Trennebene zwischen den beiden Abschnitten SE1 und SE2 ist mit $t_1$ bezeichnet, diese schneidet die Kupplungsarme 18 etwa auf der Hälfte ihrer Länge. Die Kupplungsarme 18 sind an achsqueren Gelenkbolzen 18.3 eines zylindrischen Kupplungseinsatzteiles 25 gelagert, welches in eine entsprechende Bohrung im Kopf des zweiten Steuerelement-Abschnitts SE2 eingesetzt und dort bei 26 verstiftet ist.

Die Kupplungssperre besteht aus einem in der Kupplungslängsachse $k_0$-$k_0$ längsverschieblich und federbelastet gelagerten Verriegelungsstößel 20, der in der verriegelten Stellung (Fig. 3 bis 6) zwischen die Kupplungsklauen 18.1 greift und diese mit ihren Kupplungsvorsprüngen 18.2 in den Rücksprüngen 19.1 hält, dagegen in der entriegelten Stellung (siehe Fig. 7 bis 9) aus dem Axialbereich der Kupplungsklauen 18.1 zurückgezogen ist.

Der Verriegelungsstößel 20 sitzt an einem Arretierkolben 20.1, der in einem Zylinderraum 21 im Inneren des ersten Steuerelement-Abschnitts SE1 längsverschieblich und rückstellend federbelastet gelagert ist, siehe die Schraubendruckfeder 22, die sich als Rückstellfeder einerseits am Arretierkolben 20.1 und andererseits an einem Innenbund 21.1 der Höhlung 21 abstützt. Der Verriegelungsstößel 20 greift durch die Öffnung 23.1 einer Bodenwand 23 hindurch zwischen die Kupplungsklauen 18.1. Der Verriegelungsstößel 20 ist an seinem Ende konisch angespitzt, zur Erleichterung der Ver- und Entriegelungsbewegung. Die der Rückstellfeder 22 abgewandte Seite des Arretierkolbens 20.1 steht über einen Wandkanal 24 in der Bodenwand 23 mit dem Druckbehälter-Plenum in Verbindung, so daß bei Erreichen des Grenzwertes des leckabhängigen Differenzdruckes $\Delta$ p der Arretierkolben 20.1 entgegen der Kraft seiner Rückstellfeder 22 axial verschoben und damit der Verriegelungsstößel 20 in die entriegelte Stellung gemäß Fig. 7 gezogen wird. Diese Entriegelungsbewegung wird durch die Strömung noch unterstützt, wie es die Strömungspfeile in Fig. 7 zeigen. Hierzu sind noch gesonderte Strömungsöffnungen 27 in der Wand des Kopfes 28 des zweiten Steuerelement-Abschnittes SE2 vorgesehen. Die Momentaufnahmen nach Fig. 7 bis 9 zeigen den Entriegelungs- und Trennvorgang der beiden Steuerelement-Abschnitte SE1 und SE2 und sprechen für sich selbst.

Das Ausführungsbeispiel nach Fig. 10 bis 12 zeigt, daß am zweiten Steuerelement-Abschnitt SE2 in Nähe der Stabkupplung SK2 aus- und einfahrbare Blockierklinken 29 gelagert sind, welche bei Erreichen eines oberen Grenzwertes des leckabhängigen Differenzdruckes $\Delta$ p oder einer diesem Differenzdruck analogen Größe aus der Umfangskontur des zweiten Steuerelement-Abschnittes SE2 herausfahren und eine Ausfahrbewegung des zweiten Steuerelement-Abschnittes SE2 verhindern, indem sie gegen eine ihre Bewegungsbahn begrenzende Steuerelement-Führungsplatte anschlagen (vgl. dazu die Ausführungen im Zusammenhang mit Fig. 2). Die Blockierklinken 29 sind um achsquere Gelenkbolzen 30 aus- und einschwenkbar gelagert und befinden sich im Ruhezustand, wie Fig. 10 zeigt, in einer angepaßten Aussparung 31, wobei der Klinkenfuß 29.1 mit einer vertikalschrägen Kante eine Kippkante bildet, um welche die Blockierklinken 29 nach außen schwenken können, wenn die Verlängerungen 18.4 der Kupplungsarme 18 eine Schwenkbewegung um die Gelenkachse 18.3 gemäß Pfeil $f_a$ ausführen, und zwar dann, wenn der Verriegelungsstößel 20 druckdifferenzabhängig eine Bewegung in Richtung Pfeil $f_t$ ausführt, dadurch den Raum zwischen den Enden der Kupplungsarme 18 freigibt, so daß letztere von den radial wirkenden Schraubdruckfedern 33 zum Zentrum bzw. in Richtung der Kupplungsachse $k_0$-$k_0$ bewegt werden. Die Trennebene zwischen den beiden Abschnitten SE1 und SE2 ist wieder mit $t_1$ bezeichnet, Die Blockierklinken-Anordnung als Ganzes mit BK1.

Allgemein gilt für dieses Ausführungsbeispiel, daß die Blockierklinken 29 mit Steuerorganen (Verlängerungen 18.4) bzw. mit Steuerflächen dieser Steuerorgane in Eingriff stehen und diese Steuerorgane mit dem Verriegelungsstößel 20 bewegungsgekoppelt sind, so daß bei axialer Verschiebung des Verriegelungsstößels 20 auch die Steuerorgane 18.4, 18 ausgelenkt werden und dadurch das Ausfahren der Blockierklinken 29 veranlassen. Die ausgefahrene Stellung der Blockierklinken 29 ist gestrichelt angedeutet.

Beim Ausführungsbeispiel nach Fig. 13 bis 15 ist die lösbare Stabkupplung mit SK3 bezeichnet (dritte Ausführungsform) und die Blockierklinken-Anordnung mit BK2 (zweite Ausführungsform). Die Blockierklinken 29$'$ sind hier jeweils als Kniehebel-Gelenklaschen 29a, 29b ausgeführt, mit je einem achsqueren Gelenkbolzen 29.1, 29.2. Beide Laschen eines Laschenpaares sind über Gelenkbolzen 29.3 und Langloch 29.4 miteinander gelenkig verbunden. Die Blockierklinke 29$'$ sind von einem koaxial zum Arretierkolben 20.1, jedoch gegenläufig zu diesem auslenkbaren Sperrkolben 34 steuerbar, dessen hohle Kolbenstange 35 den Verriegelungsstößel 20 des Arretierkolbens 20.1 durchdringt und den im Leckstörfall niedrigen Innendruck $p_2$ dem Innenraum des Sperrkolbens 34 zuleitet, dessen Außendruck $p_1$ auf der Ober-bzw. Außenseite des Sperrkolbens 34 lastet, siehe z.B. Druckübertragungsbohrung 36. Der Außendruck $p_1$ entspricht dem Druck des Druckbehälter-Plenums, wobei $p_2$ $\ll$ im Vergleich zu $p_1$ und wobei $\Delta$ p = $p_2$ - $p_1$. Die Kolbenstange 35 des rückstellend federbelasteten Sperrkolbens (siehe Rückstellfeder 37) ist mit Steuernocken 38 versehen, welche bei Erreichen des Grenzwertes des Differenzdruckes $\Delta$ p und bei Axialverschiebung des Sperrkolbens 34, siehe den Richtungspfeil -$f_t$, die mit den Steuernocken 38 in Eingriff stehenden Blockierklinken 29$'$ in die Blokkierposition (siehe rechter Teil von Fig. 13) ausfahren. Die Kupplungsarme 18$'$ sind im Vergleich zu den Ausführungen nach Fig. 3 und Fig. 10 etwas modifiziert, arbeiten aber gleichartig. Die Trennebene zwischen den beiden Steuerelement-Abschnitten SE1 und SE2 ist wieder mit $t_1$ bezeichnet, der linke Teil der Fig. 13 zeigt die Normalstellung, der rechte Teil, wie gesagt, die Auslösestellung.

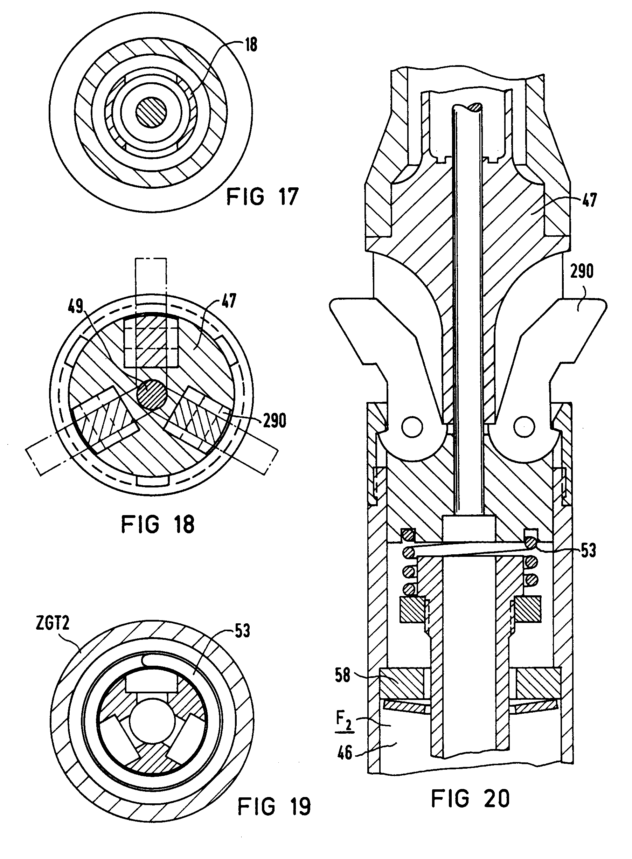

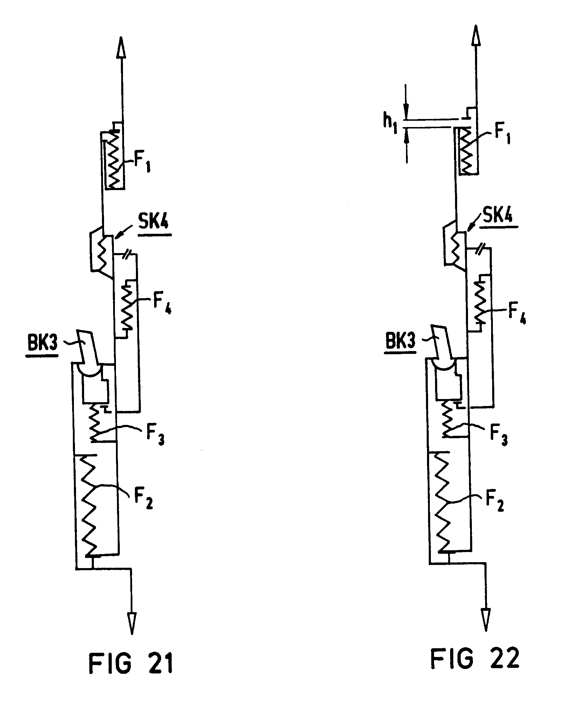

Beim Ausführungsbeispiel nach Fig. 16 bis 25 - zunächst sei Fig. 16 erläutert - ist die lösbare Stabkupplung SK4 bezeichnet, die zugehörige Trennebene wieder mit $t_1$ und die Blockierklinken-Anordnungmit BK3. Der Antriebsteil SE11 des ersten Steuerelement-Abschnitts SE1 weist einen verstärkten Stangenkopf 39 mit unterem Flansch bzw. Bund 39.1 auf. Dieser Antriebsteil SE11 ist mit dem am unteren Ende der Fig. 16 beginnenden Spinnenteil SE21 federelastisch über ein Zwischenglied ZG gekuppelt. Dieses stangenförmige Zwischenglied ZG besteht aus einem ersten Zwischengliedteil ZGT1 und einem zweiten Zwischengliedteil ZGT2. Ersteres ist durch die lösbare Stabkupplung SK4 in die beiden Trennkörper TK1 und TK2 auftrennbar. Eine erste federelastische Kopplung $F_1$ mit der Federsteifigkeit $c_1$ ist zwischen dem Antriebsteil SE11 und dem Zwischenglied ZG bzw. dessen ersten Trennkörper TK1 vorgesehen und dient zur Übertragung der Zug- und Druckkräfte des Antriebsteils SE11 auf das Zwischenglied ZG zwecks Ausführung der normalen Hub- und Senkbewegungen des gesamten Steuerelementes SE innerhalb eines ersten Relativhubes $h_1$, vgl. Fig. 21 und 22. D.h. der Kopf 39 kann sich innerhalb des Hubes $h_1$ bewegen entgegen der Kraft der Schraubendruckfeder $F_{11}$, bevor er mit seiner oberen Bundkante 40 gegen die im Abstand $h_1$ gegenüberliegende Fläche 41.1 des Anschlagringes 41 läuft. Zwischen letzterem und einer konischen Muffe 42 ist ein Tellerfederpaket 43 eingefügt, ebenso zwischen dem unteren Flansch 39.1 des Kopfes 39 und dem Boden 44.1 der Höhlung 44 das Tellerfederpaket 45. Die konische Muffe 42 ist mit der hülsenförmigen Wand des ersten Trennkörpers TK1 verschweißt. Wenn also im Leckstörfall der Hub $h_1$ aufgrund einer beschleunigten Aufwärtsbewegung des Antriebsteils SE11 überschritten wird, tritt eine starre Kopplung zwischen dem Kopf 39 und über den ersten Trennkörper TK1 mit dem ersten Zwischengliedteil ZGT1 ein. Der erste Zwischengliedteil ZGT1 ist also mit dem Antriebsteil SE11 federelastisch über $F_1$ gekoppelt und zugkraftabhängig starr kuppelbar. Er ist als längliches Übertragungsglied ausgebildet, wobei er über eine zweite federelastische Kopplung $F_2$ der Federsteifigkeit $c_2$ mit dem zweiten Zwischengliedteil ZGT2 gekoppelt ist, welch letzterer als Abtriebsglied in den Kraftschluß zum Spinnenteil SE21 eingeschaltet ist. Die Federsteifigkeit $c_1$ ist kleiner, insbesondere wesentlich kleiner, als die Federsteifigkeit $c_2$. Für die zweite federelastische Kopplung $F_2$ wird vorzugsweise ein vorgespanntes Tellerfederpaket 46 verwendet. Betrachtet man den langgestreckten stangenförmigen zweiten Trennkörper TK2 des ersten Zwischengliedteiles ZGT1, so sieht man, daß an dessen oberen Ende die beiden Kupplungsarme 18 mit den Kupplungsklauen 18.1 und entsprechenden trapezförmigen Kupplungsvorsprüngen in entsprechend geformte trapezförmige Rücksprünge am Innenumfang des ersten Trennkörpers TK1 eingreifen. Im Anschluß an die Kupplungsarme 18 folgt ein massiver Mittelteil 47, der mit einer zentralen Bohrung 48 versehen ist, welche von einem Verriegelungsstößel 49 mit Kopf 49.1 und Sperrkonus 49.2 am anderen Ende durchdrungen ist. Dieser Verriegelungsstößel 49 hat einen Bund 49.3, und zwischen diesem Bund 49.3 und dem Boden eines zentralen Hohlraumes 50, welchen die Kupplungsarme 18 umgeben, ist eine Rückstellfeder in Form einer Schraubendruckfeder 51 eingefügt. Letztere drückt den Verriegelungsstößel 49 mit seinem Sperrkonus 49.2 in entsprechende Steuerflächen 18.5 am Innenumfang der Kupplungsklauen 18.1, so daß letztere nach außen in den Kupplungseingriff mit dem ersten Trennkörper TK1 gedrückt werden. Am massiven Mittelteil 47 sind Klinkenträger-Körper 52 in entsprechenden Aussparungen längsverschieblich und mittels der Schraubendruckfeder 53 federbelastet gelagert. Letztere stützt sich an einem Bund 54 des hohlen Schaftes 55 des ersten Zwischengliedteiles ZGT1 ab, wobei dieser hohle Schaft 55 die Fortsetzung des massiven Mittelteiles 47 ist. An seinem unteren Ende weist der hohle Schaft 55 einen weiteren fest mit ihm verbundenen Bund 56 auf, welcher in kraftschlüssigem Eingriff mit dem einen Ende des Tellerfederpaketes 46 steht, dessen anderes Ende durch den Innenbund 57 gefangen ist, welch letzterer sich an einer Schulter 58 am Innenumfang des rohrförmigen zweiten Zwischengliedteiles ZGT2 abstützt. An den Klinkenträger-Körper 52 sind über entsprechende achsquere Gelenkbolzen 59 die Blockierklinken 290 schwenkbar gelagert. In der dargestellten Lage nach Fig. 16 werden Vorsprünge 60 am Klinkenfuß übergriffen von einem Ringkragen 61, und eine diesen Ringkragen 61 aufweisende Überwurfmutter 61.1 ist auf das obere Ende des rohrförmigen zweiten Zwischengliedteiles ZGT2 aufgeschraubt und mit diesem Ende verschweißt. Man erkennt nun, daß - wenn eine starre Kopplung zwischen dem Kopf 39 des Antriebsteils SE11 und dem Zwischenglied ZG bei Überschreiten des Hubes $h_1$ eintritt, aufgrund der jetzt starren Kopplung wesentlich größere Kräfte über den hohlen Schaft und den Bund 56 auf das untere Ende des Tellerfederpaketes 46 übertragen werden. Infolgedessen wird letzteres um einen zweiten Relativhub $h_2$, der zwischen dem ersten Zwischengliedteil ZGT1 und dem zweiten Zwischengliedteil ZGT2 auftritt, zusammengepreßt, und die Blockierklinken 290 werden aufgrund dieser Relativbewegung zwangsläufig in ihre Ausfahrposition, die in Fig. 20 dargestellt ist, mitgenommen. Dabei wird die Schraubendruckfeder 53 zusammengeddrückt. Die Blockierklinken 290 verharren so lange in ihrer ausgespreizten Position nach Fig. 20, wie die vergrößerte Zugkraft zwischen Antriebsteil SE11 und dem Zwischenglied ZG herrscht. Wie bereits eingangs erläutert, sind in der Bewegungsbahn der ausgespreizten Blockierklinken 290 Führungsplatten der Steuerelemente als Anschläge angeordnet; diese sind der Einfachheit halber in Fig. 16 und 20 nicht dargestellt.

Laufen nun die Blockierklinken 290 gegen ihre Anschläge, so wird die lösbare Stabkupplung SK4 aufgetrennt, und zwar in einen ersten freigegebenen, am Antriebsteil SE11 verbleibenden Trennkörper TK1 und in einen zweiten, mittels der Blockierklinken 290 gegen Weiterbewegung blockierbaren zweiten Trennkörper TK2, wobei an diesem zweiten Trennkörper der Verriegelungsstößel 49 gelagert ist, welcher die Spreizkupplung zwischen dem ersten und dem zweiten Trennkörper TK1, TK2 normalerweise aufrechterhält und welcher bei einem dritten Relativhub $h_3$ zwischen dem zweiten Trennkörper TK2 einerseits und dem Klinkenträger-Körper 52 sowie dem zweiten Zwischengliedteil ZGT2 andererseits in eine Entriegelungsposition mitgenommen wird, in welcher die Kupplungselemente der Spreizkupplung bzw. der lösbaren Stabkupplung SK4 den ersten Trennkörper TK1 freigeben. Dieser dritte Relativhub $h_3$ wird, wie gesagt, ausgelöst, wenn die ausgespreizten Blockierklinken 290 gegen weitere Axialbewegung durch die Anschläge der Steuerelement-Führungsplatten festgehalten werden.

Mit 62 ist noch eine Schutzhülse beeichnet, welche die Kupplungsarme 18 und den Verriegelungsbolzen 49 umgibt und auf einem Ringabsatz des verstärkten Mittelteils 47 sitzt. Zur Dämpfung des Aufschlages, wenn die Blockierklinken 290 auf die Führungsplatte auftreffen, ist am unteren Ende des hohlen Schaftes 55 ein hohler Verformungskörper 63 aus duktilem austenitischem Stahl befestigt, der im Falle des Stauchvorganges in die konische Öffnung 64 der zum Spinnenkörper 16 führenden Stange 65 eintaucht. Ein Teil des Stosses wird von der Rückstellfeder 53 aufgefangen.

Der besseren Übersichtlichkeit wegen wird die federelastische Kopplung der Schraubenfeder 53 mit $F_3$ und diejenige der Schraubenfeder 51 $F_4$ bezeichnet.

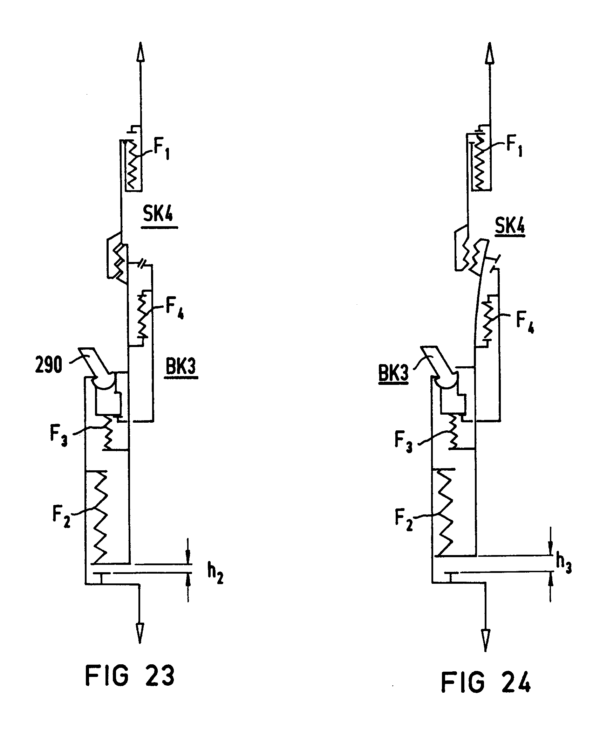

Diese Bezeichnung kehrt in Fig. 21 wieder, welche den Ruhezustand der Auswurf-Sperreinrichtung nach Fig. 16 bis 20 darstellt. Fig. 22 zeigt einen Betriebsschritt innerhalb des Maximalbetriebshubes $h_1$. Fig. 23 zeigt, daß der Hub $h_1$ von z.B. 12 mm durch Zusammenpressen der federelastischen Kopplung $F_2$ um $h_2$ von z.B. 8,2 mm weit überschritten ist und dadurch eine Auslenkung der Blockierklinken 290 erfolgt ist. Fig. 24 zeigt, daß zusätzlich zu dem Maximalhub $h_1$ von z.B. 12 mm nun noch der Hub $h_3$ von z.B. 13,5 mm auftritt, und dieser Hub reicht aus, die lösbare Stabkupplung bzw. Spreizkupplung SK4 aufzutrennen.

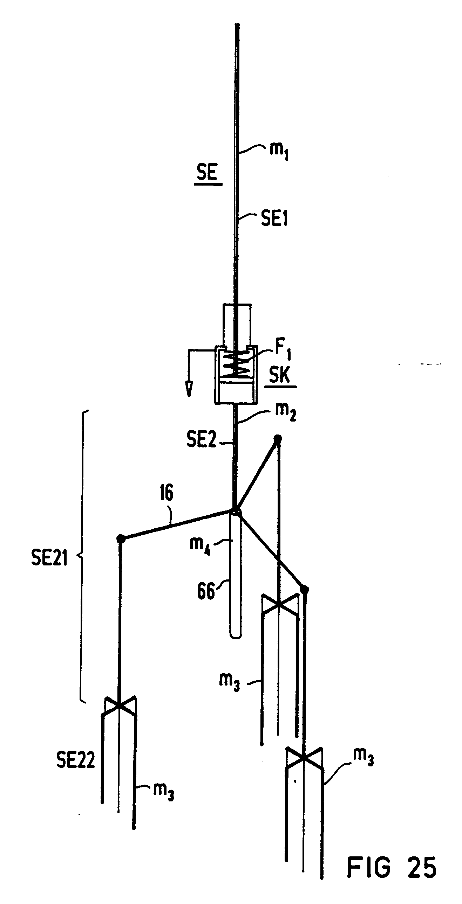

Fig. 25 zeigt die Massenverteilung bei einem Steuerelement SE und die daraus sich ergebende Federvorspannung für die erste federelastische Kopplung $F_1$. In diesem Bild ist ferner gezeigt, daß es zweckmäßig ist, ein Zusatzgewicht 66 mit einer Masse von z.B. m4 = 89 kg vorzusehen, welches mit dem Spinnenteil 16 verbunden ist und das beschleunigte Absinken der Absorberteile SE22 in den Kern bewirkt, wenn der untere Steuerelement-Abschnitt SE2 durch die lösbare Stabkupplung SK4 (Fig. 16) abgetrennt ist. Hinsichtlich weiterer geeigneter Bemessungen des Steuerelementes SE darf auf Fig. 25 verwiesen werden, wobei beispielsweise $m_1$ = 25 kg die Masse des ersten Steuerelement-Abschnittes, $m_2$ = 70 kg die Masse des zweiten Steuerelement-Abschnittes SE2 (ohne die Massen $m_3$ und $m_4$) und $m_3$ = 60 kg die Masse der drei inneren Absorberteile SE22 bedeutet.

Die konische Außenfläche der Muffe 42 nach Fig. 16 kann dazu dienen, eine Kaltverschweißung herbeizuführen, wenn diese konischen Außenflächen mit den konischen Innenflächen des "Hütchens" 2.1 (vgl. Fig. 1 und 2) zusammentreffen, und zwar dann, wenn der Antriebsteil SE11 des ersten Steuerelement-Abschnitts SE im Falle eines Stutzenlecks auf eine bestimmte Geschwindigkeit beschleunigt wird, deren kinetische Energie zur Kaltverschweißung ausreicht. Auf diese Weise kann das unerwünschte Leck abgedichtet werden, bis der Kernreaktor abgekühlt ist und mit den Reparaturmaßnahmen begonnen werden kann.

## Patentansprüche

1.  Auswurf-Sperreinrichtung für Steuerelemente von Kernreaktoren, wobei das stangenförmige Steuerelement (SE) durch eine druckdichte Durchführung (2) einer Wand (1.1) des Kernreaktor-Druckbehälters (1) durchgeführt, zur Reaktivitätssteuerung mit einem unteren bzw. inneren Absorberteil (SE22) eines zweiten Steuerelement-Abschnitts (SE2) partiell oder gänzlich in den Reaktorkern (4) einfahrbar oder aus diesem ausfahrbar ist und mit dem äußeren Antriebsteil (SE11) eines ersten Steuerelement-Abschnitts (SE1) innerhalb einer druckdichten, mit dem Druckbehälter-Plenum kommunizierenden Umschließung (2) in Wechselwirkung bringbar ist mit einem Stellantrieb (3) zum Zwecke der Verstellung in seiner Längsrichtung, wobei im Störfalle eines Lecks an der Umschließung (2) des Steuerelementes (SE) an diesem Druckdifferenzkräfte angreifen, welche das Steuerelement aus dem Druckbehälter (1) auszutreiben versuchen und das dabei beschleunigte Steuerelement an seinem ersten Steuerelement-Abschnitt (SE1) gegen Auswerfen festgehalten wird,
**dadurch gekennzeichnet,**
daß der erste Steuerelement-Abschnitt (SE1) mit dem zweiten Steuerelement-Abschnitt (SE2) über eine eine lösbare Kupplungssperre aufweisende Stabkupplung (SK; SK1 - SK4) verbunden ist, welche während der normalen Stellbewegung des Steuerelementes (SE) in Eingriff bleibt,
und daß die Stabkupplung (SK; SK1 - SK4) mit Mitteln zum Entriegeln der Kupplungssperre versehen ist, welche bei Erreichen des oberen Grenzwertes des leckabhängigen Differenzdruckes ($\Delta$p) oder einer dem Differenzdruck ($\Delta$p) analogen Größe ansprechen und die Stabkupplung lösen,
wobei der abgetrennte zweite Steuerelement-Abschnitt (SE2) mit dem Absorberteil (SE22) im Kern (4) verbleibt und zur Einnahme seiner voll in den Kern eingefahrenen Position freigegeben ist.

2.  Einrichtung nach Anspruch 1,
    **dadurch gekennzeichnet,** daß die lösbare Stabkupplung (SK) eine Klauenkupplung (SK1) ist, mit am zweiten Steuerelement-Abschnitt (SE2) radial aus- und einlenkbar gelagerten Kupplungsarmen (18), die an ihren Enden die Kupplungsklauen (18.1) aufweisen und sich achsparallel bezüglich einer zentrischen Kupplungslängsachse ($k_0$-$k_0$) erstrecken
    und daß die Kupplungsklauen (18.1) mit im Querschnitt trapezförmigen Kupplungsvorsprüngen (18.2) in entsprechend geformte Rücksprünge (19.1) einer Kupplungshöhlung (19) des ersten Steuerelement-Abschnitts (SE1) eingreifen,
    daß die Kupplungssperre aus einem in der Kupplungslängsachse ($k_0$-$k_0$) längsverschieblich und federbelastet im ersten Steuerelement-Abschnitt (SE1) gelagerten Verriegelungsstößel (20) besteht, der in der verriegelten Stellung zwischen die Kupplungsklauen (18.1) greift und diese mit ihren Kupplungsvorsprüngen (18.2) in den Rücksprüngen (19.1) hält, dagegen in der entriegelten Stellung aus dem Axialbereich der Kupplungsklauen (18.1) zurückgezogen ist.

3.  Einrichtung nach Anspruch 2,
    **dadurch gekennzeichnet,** daß der Verriegelungsstößel (20) an einem Arretierkolben (20.1) sitzt, der in einem Zylinderraum (21) im Inneren des ersten Steuerelement-Abschnitts (SE1) längsverschieblich und rückstellend federbelastet gelagert ist,
wobei der Verriegelungsstößel (20) durch die Öffnung (23.1) einer Bodenwand (23) hindurch zwischen die Kupplungsklauen (18.1) greift und die der Rückstellfeder (22) abgewandte Kolbenseite über einen Wandkanal (24) des ersten Steuerelement-Abschnitts (SE1) mit dem Druckbehälter-Plenum kommuniziert, so daß bei Erreichen des Grenzwertes des leckabhängigen Differenzdruckes ( $\Delta$ p) der Arretierkolben (20.1) entgegen der Kraft seiner Rückstellfeder (22) axial verschoben und damit der Verriegelungsstößel (20) in die entriegelte Stellung gezogen wird.

4.  Einrichtung nach einem der Ansprüche 1 bis 3,
    **dadurch gekennzeichnet,** daß am zweiten Steuerelement-Abschnitt (SE2) in Nähe der Stabkupplung (SK2) aus- und einlenkbare Blockierklinken (29) gelagert sind, welche bei Erreichen eines oberen Grenzwertes des leckabhängigen Differenzdruckes ($\Delta$p) oder einer dem Differenzdruck analogen Größe aus der Umfangskontur des zweiten Steuerelement-Abschnittes (SE2) heraus fahren und eine Ausfahrbewegung des zweiten Steuerelement-Abschnittes (SE2) verhindern, indem sie gegen eine ihre Bewegungsbahn begrenzende Steuerelement-Führungsplatte (10) anschlagen.

5.  Einrichtung nach Anspruch 4,
    **dadurch gekennzeichnet,** daß die Blockierklinken (29) mit Steuerflächen von auslenkbar am zweiten Steuerelement-Abschnitt (SE2) gelagerten Steuerorganen (18.4) in Eingriff stehen und die Steuerorgane mit dem Verriegelungsstößel (20) bewegungsgekoppelt sind, so daß bei axialer Verschiebung des Verriegelungsstößels (20) auch die Steuerorgane (18.4) ausgelenkt werden und dadurch das Ausfahren der Blockierklinken (29) veranlassen.

6.  Einrichtung nach Anspruch 4 oder 5,
    **dadurch gekennzeichnet,** daß die Blockierklinken (29) um achsquere Gelenkbolzen (30) des zweiten Steuerelement-Abschnitts (SE2) aus- und einschwenkbar gelagert sind.

7.  Einrichtung nach Anspruch 2, 5 und 6,
    **dadurch gekennzeichnet,** daß die Steuerorgane von Verlängerungen (18.4) der Kupplungsarme (18) gebildet sind und an die freien Enden der Verlängerungen Blockierklinken (29) angelenkt sind, welche bei Auslösebewegung der Kupplungsarme (18), wenn diese in gezogener Stellung des Verriegelungsstößels (20) mit ihren Kupplungsklauen (18.1) zusammentreffen, von den um die Schwenkachse der Kupplungsarme radial auswärts ausgelenkten Verlängerungen (18.4) in ihre Blockier-Stellung mitgenommen werden.

8. Einrichtung nach Anspruch 4,
   **dadurch gekennzeichnet,** daß die Blockierklinken (29') im zweiten Steuerelement-Abschnitt (SE2) von einem koaxial zum Arretierkolben (20.1), jedoch gegenläufig zu diesem auslenkbaren Sperrkolben (34) steuerbar sind, dessen hohle Kolbenstange (35) den Verriegelungsstößel (20) des Arretierkolbens (20.1) durchdringt und dem im Leckstörfall niedrigen Innendruck ($p_2$) dem Innenraum des Sperrkolbens (34) zuleitet, dessen Außendruck ($p_1$) auf der Ober- bzw. Außenseite des Sperrkolbens lastet und dem Druck des Druckbehälter-Plenums entspricht, wobei $p_2 \ll$ gegenüber $p_1$ und $\Delta p = p_2 - p_1$ und wobei die Kolbenstange (35) des rückstellend federbelasteten Sperrkolbens (34) mit Steuernocken (38) versehen ist, welche bei Erreichen des Grenzwertes des Differenzdruckes $\Delta p$ und Axialverschiebung des Sperrkolbens (34) mit den Steuernocken (38) in Eingriff stehende Blockierklinken (29') in die Blockierposition aus fahren.

9. Auswurf-Sperreinrichtung für Steuerelemente von Kernreaktoren nach einem der Ansprüche 1, 2 oder 4, mit einem Kernreaktor-Druckbehälter (1) mit Reaktorkern (4) in seinem Inneren, bestehend aus einem Kerngerüst und in diesem Kerngerüst angeordneten Brennelementen (5), zwischen denen sich vertikale Längskanäle befinden,
   und mit den besagten Steuerelementen (SE), welche druckdicht durch den Deckel (1.1) des Kernreaktor-Druckbehälters (1) hindurchgeführt sind, mit einem den nach außen ragenden Teil jedes Steuerelementes umgebenden Fingerhutrohr (2), welches mit dem Kernreaktor-Druckbehälter (1) druckdicht verbunden ist und mit dessen Innenraum kommuniziert,
   wobei die stangenförmigen Steuerelemente (SE) jeweils einen ersten Steuerelement-Abschnitt (SE1) mit Antriebsteil (SE11) und einen zweiten Steuerelement-Abschnitt (SE2) mit Spinnenteil (SE21) und daran sich anschliessenden unteren Absorberteil (SE22) aufweisen, und wobei der Absorberteil (SE22) des zweiten Steuerelement-Abschnitts (SE2) zur Beeinflußung der Reaktivität des Reaktorkerns (4) bezüglich der Längskanäle partiell oder gänzlich ein-und ausfahrbar ist,
   ferner mit druckdifferenz-abhängig ansprechenden Mitteln zum Blockieren der Steuerelemente (SE) gegen unerwünschtes Auswerfen, wenn durch ein Leck am Fingerhutrohr (2) an dem betroffenen Steuerelement Druckkräfte angreifen, die einen Grenzwert $\Delta p$ überschreiten und sich aus der Differenz zwischen dem Druckbehälter-Innendruck und dem Außendruck ergeben,
**dadurch gekennzeichnet,**
   - daß der Antriebsteil (SE11) mit dem Spinnenteil (SE21) federelastisch über ein Zwischenglied (ZG) gekoppelt ist,
   - daß eine erste federelastische Kopplung ($F_1$) mit der Federsteifigkeit ($c_1$) zwischen dem Antriebsteil (SE11) und dem Zwischenglied (ZG) zur Übertragung der Zug- und Druckkräfte des Antriebsteils (SE11) auf das Zwischenglied (ZG) zwecks Ausführung der normalen Hub- und Senkbewegungen des Steuerelements innerhalb eines ersten Relativhubes ($h_1$) vorgesehen ist;
   - daß Mittel zur starren Kupplung zwischen Antriebsteil (SE11) und Zwischenglied (ZG) vorgesehen sind, wenn aufgrund vergrößerter Zugkräfte des Antriebsteils der Federweg der federelastischen Kopplung ($F_1$) den ersten Relativhub ($h_1$) überschreitet;
   - daß das Zwischenglied (ZG) einen ersten Zwischengliedteil (ZGT1) aufweist, welcher mit dem Antriebsteil (SE11) federelastisch gekoppelt und zugkraftabhängig starr kuppelbar und als ein längliches Übertragungsglied ausgebildet ist, wobei dieser erste Zwischengliedteil (ZGT1) über eine zweite federelastische Kopplung ($F_2$) der Federsteifigkeit ($c_2$) mit einem zweiten Zwischengliedteil (ZGT2) gekoppelt ist, welcher als Abtriebsglied in den Kraftschluß zum Spinnenteil (SE21) eingeschaltet ist, wobei $c_1 < c_2$;
   - daß am Zwischenglied (ZG) ein Klinkenträger (52) mit radial ausspreizbaren Blockierklinken (290) längsverschieblich und federbelastet gelagert ist, wobei die Blockierklinken (290) bei einem zugkraftabhängig erfolgenden zweiten Relativhub ($h_2$) des ersten Zwischengliedteiles (ZGT1) relativ zum zweiten Zwischengliedteil (ZGT2) unter Auslenkung der zweiten federelastischen Kopplung ($F_2$) ausgespreizt werden und so lange in ihrer ausgespreizten Position verharren, wie die vergrößerte Zugkraft zwischen Antriebsteil (SE11) und Zwischenglied (ZG) herrscht;

- daß in der Bewegungsbahn der ausgespreizten Blockierklinken (290) Führungsplatten (10) der Steuerelemente (SE) als Anschläge angeordnet sind;

- daß der erste Zwischengliedteil (ZGT1) durch die lösbare Stabkupplung (SK4) in Form einer Spreizkupplung auftrennbar ist in einen ersten freigegebenen, am Antriebsteil verbleibenden Trennkörper (TK1) und in einen zweiten, mittels der Blockierklinken (290) gegen Weiterbewegung blockierbaren zweiten Trennkörper (TK2), wobei am zweiten Trennkörper ein Verriegelungsstößel (49) gelagert ist, welcher die Spreizkupplung zwischen dem ersten und dem zweiten Trennkörper (TK1, TK2) normalerweise aufrechterhält und welcher bei einem dritten Relativhub ($h_3$) zwischen dem zweiten Trennkörper (TK2) einerseits und dem Klinkenträger (52) sowie dem zweiten Zwischengliedteil (ZGT2) andererseits in eine Entriegelungsposition mitgenommen wird, in welcher die Kupplungselemente (18, 18.1) der Spreizkupplung (SK4) den ersten Trennkörper (TK1) freigeben

- und daß der dritte Relativhub ($h_3$) ausgelöst wird, wenn die ausgespreizten Blockierklinken (290) gegen weitere Axialbewegung durch die Anschläge der Führungsplatten (10) festgehalten werden.

## Claims

1. Ejection-blocking device for control elements of nuclear reactors, in which the rod-like control element (SE) is guided through a pressure-tight duct (2) of a wall (1.1) of the nuclear reactor pressure vessel (1), at a lower or inner absorber part (SE22) of a second control element section (SE2) can be inserted partially or totally into the reactor core (4) or can be extracted therefrom for the purposes of reactivity control, and at the outer drive part (SE11) of a first control element section (SE1) within a pressure-tight encapsulation (2) which communicates with the pressure vessel plenum can be brought into interaction with an actuating drive (3) for the purposes of adjustment in its longitudinal direction, in which in the disturbance case of a leakage at the encapsulation (2) of the control element (SE) differential pressure forces act on said element, which forces seek to drive the control element out of the pressure vessel (1) and the control element which is accelerated thereby is held fast at its first control element section (SE1) against ejection, characterised in that the first control element section (SE1) is connected with the second control element section (SE2) by way of a bar coupling (SK; SK1 - SK4) which has a releasable coupling stop and which remains in engagement during the normal adjusting movement of the control element (SE), and in that the bar coupling (SK; SK1 - SK4) is provided with means for unlocking the coupling stop, which means respond when the upper limiting value of the leakage-dependent differential pressure ($\Delta p$) or a variable analogous to the differential pressure ($\Delta p$) is reached and release the bar coupling, with the separated second control element section (SE2) remaining in the core (4) with the absorber part (SE22) and being freed for the purpose of occupying its position in which it is fully inserted in the core.

2. Device according to claim 1, characterised in that the releasable bar coupling (SK) is a claw coupling (SK1) with coupling arms (18) which are mounted on the second control element section (SE2) so as to be capable of radial deflection inwards and outwards, which have coupling claws (18.1) at their ends and which extend in an axially parallel manner relative to a centric longitudinal coupling axis ($k_0$-$k_0$), and in that the coupling claws (18.1) engage with coupling projections (18.2), which are trapezoidal in cross section, into correspondingly shaped recesses (19.1) of a coupling hollow (19) of the first control element section (SE1), in that the coupling stop consists of a locking plunger (20) which is mounted so as to be longitudinally displaceable in the coupling longitudinal axis ($k_0$-$k_0$) and spring-loaded in the first control element section (SE1) and which in the locked position engages between the coupling claws (18.1) and holds the latter with their coupling projections (18.2) in the recesses (19.1) and, on the other hand, in the unlocked position is drawn out of the axial region of the coupling claws (18.1).

3. Device according to claim 2, characterised in that the locking plunger (20) sits on a check piston (20.1) which is mounted in a cylinder space (21) in the interior of the first control element section (SE1) so as to be longitudinally displaceable and spring-loaded in a restoring direction, with the locking plunger (20) passing through the opening (23.1) of a base wall (23) to engage between the coupling claws (18.1) and with the piston side which is remote from the restoring spring (22) communicating by way of a wall channel (24) of the first control element section (SE1) with the pressure vessel plenum so that when the limiting value of the leakage-dependent differential pressure ($\Delta p$) is reached the check piston (20.1) is axially displaced in opposition to the force of its restoring spring (22) and with that the locking plunger (20) is drawn into the unlocked position.

4. Device according to one of the claims 1 to 3, characterised in that blocking latches (29) which can be deflected inwards and outwards are mounted on the second control element section (SE2) in the vicinity of the bar coupling (SK2), which latches, when an upper limiting value of the leakage-dependent differential pressure ($\Delta p$) or a variable analogous to the differential pressure is reached, move out of the peripheral contour of the second control element section (SE2) and prevent a movement of retraction of the second control element section (SE2) as they strike against a control element guide plate (10) which limits their path of movement.

5. Device according to claim 4, characterised in that the blocking latches (29) are engaged with control surfaces of control parts (18.4) which are mounted on the second control element section (SE2) so that they can be deflected and the control parts are coupled in terms of movement with the locking plunger (20) so that with axial displacement of the locking plunger (20) the control parts (18.4) are also deflected and thereby cause the blocking latches (29) to move out.

6. Device according to claim 4 or 5, characterised in that the blocking latches (29) are mounted about transverse-axis link pins (30) of the second control element section (SE2) such that they can be swung inwards and outwards.

7. Device according to claim 2, 5 and 6, characterised in that the control parts are formed by extensions (18.4) of the coupling arms (18) and articulated at the free ends of the extensions are blocking latches (29) which with the tripping movement of the coupling arms (18), when the latter meet at their coupling claws (18.1) in the drawn-out position of the locking plunger (20), are entrained into their blocking position by the extensions (18.4), which are deflected radially outwards about the swivel axis of the coupling arms.

8. Device according to claim 4, characterised in that the blocking latches (29') in the second control element section (SE2) can be controlled by a stop piston (34) which can be deflected coaxially to the check piston (20.1), yet in the opposite direction to the latter, and the hollow piston rod (35) of which penetrates the locking plunger (20) of the check piston (20.1) and conducts the internal pressure ($p_2$), which is low in the disturbance case of a leakage, to the interior space of the stop piston (34), the external pressure ($p_1$) of which bears on the upper or outer side of the stop piston and corresponds to the pressure of the pressure vessel plenum, with $p_2 \ll$ in respect of $p_1$ and $\Delta p = p_2 - p_1$ and with the piston rod (35) of the stop piston (34) which is spring-loaded in a restoring direction being provided with control cams (38) which, when the limiting value of the differential pressure $\Delta p$ is reached and there is axial displacement of the stop piston (34), move blocking latches (29') engaged with the control cams (38) out into the blocking position.

9. Ejection-blocking device for control elements of nuclear reactors according to one of the claims 1, 2 or 4, having a nuclear reactor pressure vessel (1) with reactor core (4) in its interior, consisting of a core frame and fuel elements (5) which are arranged in this core frame and between which are located vertical longitudinal channels, and with said control elements (SE) which are guided through the cover (1.1) of the nuclear reactor pressure vessel (1) in a pressure-tight manner, having a thimble tube (2) which surrounds the outwardly projecting part of each control element and which is connected in a pressure-tight manner with the nuclear reactor pressure vessel (1) and communicates with the interior space thereof, with the rod-like control elements (SE) each having a first control element section (SE1) with drive part (SE11) and a second control element section (SE2) with spider part (SE21) and lower absorber part (SE22) connected thereto, and with the absorber part (SE22) of the second control element section (SE2) for the purpose of influencing the reactivity of the reactor core (4) being capable of being inserted and extracted partially or totally relative to the longitudinal channels, furthermore having means which respond as a function of the differential pressure for the purpose of blocking the control elements (SE) against undesirable ejection if as a result of a leakage at the thimble tube (2) there act at the affected control element pressure forces which exceed a limiting value $\Delta p$ and which result from the difference between the pressure vessel internal pressure and the external pressure, characterised in that the drive part (SE11) is coupled with the spider portion (SE21) in a spring-elastic manner by way of an intermediate member (ZG); in that a first spring-elastic coupling ($F_1$) is provided, having spring rigidity ($c_1$), between the drive part (SE11) and the intermediate member (ZG) for transmitting the tensile and pressure forces of the drive part (SE11) to the intermediate member (ZG) for the purpose of executing the normal lifting and lowering movements of the control element within a first relative stroke ($h_1$); in that means are provided for the rigid coupling between drive part (SE11) and intermediate member (ZG) if on account of increased tensile forces of the drive part the spring travel of the spring elastic coupling ($F_1$) exceeds the first relative stroke ($h_1$); in that the intermediate member (ZG) has a first intermediate member part (ZGT1) which is coupled with the drive part (SE11) in a spring-elastic manner and is formed so that it can be coupled rigidly as a function of the tensile force, and as an elongated transmission member, with this first intermediate member part (ZGT1) being coupled, by way of a second spring-elastic coupling ($F_2$) of spring rigidity ($c_2$), with a second intermediate member part (ZGT2) which is connected as a power take-off member in a force-locking manner with the spider part (SE21), with $c_1 < c_2$; in that a latch carrier (52) with blocking latches (290) which can be spread out radially is mounted on the intermediate member (ZG) in a longitudinally displaceable and spring-loaded manner, with the blocking latches (290) being spread out in the case of a second relative stroke ($h_2$) of the first intermediate member part (ZGT1), which occurs as a function of tensile force, relative to the second intermediate member part (ZGT2) with deflection of the second spring-elastic coupling ($F_2$) and remaining in their spread-out position for as long as the increased tensile force prevails between drive part (SE11) and intermediate member (ZG); in that guide plates (10) of the control elements (SE) are arranged as stops in the path of movement of the spread-out blocking latches (290); in that the first intermediate member part (ZGT1) can be split by means of the releasable bar coupling (SK4) in the form of a spreading coupling into a first freed separation body (TK1) remaining on the drive part and into a second separation body (TK2) which can be blocked by means of the blocking latches (290) against further movement, with a locking plunger (49) being mounted on the second separation body, which plunger normally maintains the spreading coupling between the first and the second separation body (TK1, TK2) and which plunger in the case of a third relative stroke ($h_3$) between the second separation body (TK2), on the one hand, and the latch carrier (52) and also the second intermediate member part (ZGT2), on the other hand, is entrained into an unlocking position in which the coupling elements (18, 18.1) of the spreading coupling (SK4) free the first separation body (TK1); and in that the third relative stroke ($h_3$) is triggered when the spread-out blocking latches (290) are held fast against further axial movement by means of the stops of the guide plates (10).

## Revendications

1. Dispositif anti-éjection pour des éléments de commande de réacteurs nucléaires,
   dans lequel l'élément de commande en forme de barre (SE) traverse une traversée (2), étanche à la pression, d'une paroi (1.1) de la cuve sous pression (1) du réacteur nucléaire, peut être introduit dans le coeur (4) du réacteur ou en être ressorti, partiellement ou complètement, pour commander la réactivité, par une partie inférieure ou intérieure formant absorbeur (SE22) d'une seconde section (SE2) de l'élément de commande et peut être amené, par la partie extérieure d'entraînement (SE11) d'une première section (SE1) de l'élément de commande à l'intérieur d'une enceinte (2) étanche à la pression, qui communique avec la chambre d'accumulation de la cuve sous pression, à coopérer avec un dispositif de servocommande (3) pour l'obtention du déplacement dans sa direction longitudinale, et
   dans lequel, dans le cas d'un incident lié à une fuite au niveau de l'enceinte (2) de l'élément de commande (SE), ce dernier est attaqué par des forces dues à une différence de pression, qui tendent à expulser l'élément de commande de la cuve sous pression (1), et l'élément de commande alors accéléré est empêché d'être éjecté, au niveau de sa première section (SE1),
   caractérisé par le fait
   que la première section (SE1) de l'élément de commande est reliée à la seconde section (SE2) de cet élément de commande par l'intermédiaire d'un accouplement à barres (SK; SK1 - SK4), qui possède un dispositif de blocage amovible et qui est en prise pendant le déplacement normal de réglage de l'élément de commande (SE), et
   que l'accouplement à barres (SK; SK1-SK4) est muni de moyens pour déverrouiller le dispositif de blocage de l'accouplement, qui répondent lorsque le seuil supérieur de la pres-

sion différentielle ($\Delta$p), qui dépend de la fuite, ou d'une grandeur analogue à la pression différentielle ($\Delta$p) est atteint, et qui désenclenchent l'accouplement à barres,

la seconde section distincte (SE2) de l'élément de commande restant, ainsi que la partie formant absorbeur (SE22), dans le coeur (4) et étant libérée de manière à prendre sa position complètement rentrée dans le coeur.

2. Dispositif suivant la revendication 1, caractérisé par le fait

que l'accouplement amovible à barres (SK) est un accouplement à griffes (SK1), qui comporte des bras d'accouplement (18), qui sont montés de manière à pouvoir être ressortis et rentrés radialement sur la seconde section (SE2) de l'élément de commande et qui possèdent, à leurs extrémités, des griffes d'accouplement (18.1) et s'étendent de telle sorte que leur axe soit parallèle à l'axe longitudinal central ($k_0$-$k_0$) de l'accouplement, et

que les griffes d'accouplement (18.1) s'engagent, par des éléments saillants d'accouplement (18.2) de forme trapézoïdale en coupe transversale, dans des renforcements correspondants (19.1) d'une cavité d'accouplement (19) de la première section (SE1) de l'élément de commande,

que le dispositif de blocage de l'accouplement est constitué d'un poussoir de verrouillage (20), qui est monté mobile longitudinalement suivant l'axe longitudinal ($k_0$-$k_0$) de l'accouplement et en étant sollicité par un ressort dans la première section (SE1) de l'élément de commande et qui, dans la position verrouillée, pénètre entre les griffes d'accouplement (18.1) et maintient ces dernières, par leurs appendices saillants (18.2), dans les renforcements (19.1), alors que dans la position déverrouillée, le poussoir est rétracté hors de la zone axiale des griffes d'accouplement (18.1).

3. Dispositif suivant la revendication 2, caractérisé par le fait

que le poussoir de verrouillage (20) prend appui sur un piston d'arrêt (20.1), qui est monté mobile déplaçable longitudinalement dans une chambre cylindrique (21) située à l'intérieur de la première section (SE1) de l'élément de commande et est chargé par un ressort de rappel,

le poussoir de verrouillage (20) pénétrant par l'ouverture (23.1) d'une paroi (23) du fond entre les griffes d'accouplement (18.1), tandis que la face du piston tournée à l'opposé du ressort de rappel (22) communique, par l'intermédiaire d'un canal (24), ménagé dans la paroi, de la première section (SE1) de l'élément de commande avec le collecteur de la cuve sous pression de sorte que, lorsque le seuil de la pression différentielle ($\Delta$p), qui dépend de la fuite, est atteint, le piston d'arrêt (20.1) soit déplacé axialement à l'encontre de la force de son ressort de rappel (22) et que par conséquent le poussoir de verrouillage (20) soit tiré dans la position déverrouillée.

4. Dispositif suivant l'une des revendications 1 à 3, caractérisé par le fait que sur la seconde section (SE2) de l'élément de commande sont montés, à proximité de l'accouplement à barres (SK2), des cliquets de blocage (29), qui peuvent être sortis et rentrés et qui, lorsqu'un seuil supérieur de la pression différentielle ($\Delta$p), qui dépend de la fuite, ou une grandeur analogue à la pression différentielle est atteint, sortent du contour périphérique de la seconde section (SE2) de l'élément de commande et empêchent un mouvement de sortie de la seconde section (SE2) de l'élément de commande, par le fait que les cliquets s'appliquent sur une plaque (10) de guidage de l'élément de commande, qui limite la trajectoire de déplacement des cliquets.

5. Dispositif suivant la revendication 4, caractérisé par le fait que les cliquets de blocage (22) sont en prise avec des surfaces de commande d'organes de commande (18.4), qui sont montés de manière à pouvoir être écarté, sur la seconde section (SE2) de l'élément de commande et que les organes de commande sont accouplés, dans leur déplacement, au poussoir de verrouillage (20) de sorte que, lors du déplacement axial du poussoir de verrouillage (20), les organes de commande (18.4) sont également déviés et déclenchent de ce fait la sortie des cliquets de blocage (29).

6. Dispositif suivant la revendication 4 ou 5, caractérisé par le fait que les cliquets de blocage (29) sont montés de manière à pouvoir être sortis et rentrés par pivotement autour d'axes d'articulation (30), qui sont transversaux à l'axe, de la seconde section (SE2) de l'élément de commande.

7. Dispositif suivant les revendications 2, 5 et 6, caractérisé par le fait que les organes de commande sont formés par des prolongements (18.4) des bras d'accouplement (18) et que sur les extrémités libres des prolongements sont articulés des cliquets de blocage (29) qui, lors du mouvement de désenclenchement des bras d'accouplement (18), lorsque ces derniers se rencontrent par leurs griffes d'accouplement (18.1) lorsque le poussoir de verrouillage (20) est dans la position rétractée, sont entraînés simultanément dans leur position de blocage par les prolongements (18.4) déviés radialement vers l'extérieur par rapport à l'axe de pivotement des bras d'accouplement.

8. Dispositif suivant la revendication 4, caractérisé par le fait que les cliquets de blocage (29') présents dans la seconde section (SE2) de l'élément de commande peuvent être commandés par un piston de blocage (34), qui peut être dévié coaxialement par rapport au piston d'arrêt (20.1) mais en sens opposé de ce dernier et dont la tige de piston creuse (35) traverse le poussoir de verrouillage (20) du piston d'arrêt (20.1) et envoie la pression intérieure ($p_2$), qui est faible dans le cas d'une incident dû à une fuite, à la chambre intérieure du piston de blocage (34), dont la pression extérieure ($p_1$) s'applique à la face supérieure ou la face extérieure du piston de blocage et correspond à la pression du collecteur de la cuve sous pression, avec $p_2 \ll p_1$ et $\Delta p = p_2 - p_1$, la tige (35) du piston de blocage (34) chargé par un ressort de rappel étant équipée de cames de commande (38) qui, avec des cliquets de blocage (29') qui sont en prise avec les cames de commande (38), sortent en venant dans la position de blocage, lorsque le seuil de la pression différentielle $\Delta p$ est atteint et lorsque le piston de blocage (34) est déplacé axialement.

9. Dispositif anti-injection pour des éléments de commande de réacteurs nucléaires suivant l'une des revendications 1, 2 ou 4, comportant une cuve sous pression (1) contenant en son sein un coeur (4) de réacteur, constitué d'une ossature du coeur et des assemblées combustibles (5) qui sont disposés dans cette ossature du coeur et entre lesquels s'étendent des canaux longitudinaux verticaux, et

lesdits éléments de commande (SE), qui traversent d'une manière étanche à la pression le couvercle (1.1) de la cuve sous pression (1) du réacteur nucléaire, une chaussette (2), qui entoure la partie, en saillie à l'extérieur, de chaque élément de commande, qui communique de façon étanche à la pression avec la cuve sous pression (1) du réacteur nucléaire et qui communique avec l'intérieur de cette cuve, et dans lequel

les éléments de commande en forme de barres (SE) comportent chacun une première section (SE1) possédant une partie d'entraînement (SE11) et une seconde section (SE2) comportant une araignée (SE21) et une partie inférieure formant absorbeur (SE22), qui se raccorde à l'araignée, et

dans lequel la partie formant absorbeur (SE22) de la seconde section (SE2) de l'élément de commande peut être rétractée et déployée, partiellement ou en totalité, par rapport aux canaux longitudinaux, pour influencer la réactivité du coeur (4) du réacteur, et

en outre des moyens qui répondent en fonction d'une différence de pression et servent à empêcher l'éjection indésirable des éléments de commande (SE) lorsqu'une fuite au niveau de la chaussette (2) provoque l'application, à l'élément de commande considéré, de forces de pression qui dépassent un seuil $\Delta p$ et qui proviennent de la différence entre la pression à l'intérieur de la cuve sous pression et la pression à l'extérieur,

caractérisé par le fait

- que la partie d'entraînement (SE11) est couplée élastiquement à la manière d'un ressort par un élément intermédiaire (ZG) à l'araignée (SE21),
- qu'un premier accouplement ($F_1$) élastique à la mnière d'un ressort et de la raideur élastique ($c_1$) est prévu entre la partie d'entraînement (SE11) et l'élément intermédiaire (ZG) pour la transmission des forces de traction et de compression de la partie d'entraînement (SE11) à l'élément intermédiaire (ZG) en vue d'effectuer des mouvements normaux de soulèvement et d'abaissement de l'élément de commande dans les limites d'une première course relative ($h_1$);
- qu'il est prévu des moyens d'accouplement rigide entre la partie d'entraînement (SE11) et l'élément intermédiaire (ZG), lorsque, sur la base de forces accrues de traction de la partie d'entraînement, la course élastique de l'accouplement ($F_1$) élastique à la manière d'un ressort dépasse la première course relative ($h_1$);
- que l'élément intermédiaire (ZG) comporte une première partie (ZGT1), qui est accouplée avec une élasticité de ressort et qui peut être accouplée rigidement, indépendamment de la force de traction, à la partie d'entraînement (SE11), l'élément intermédiaire (ZG) ayant la forme d'un organe de transmission oblong, cette Première partie (ZGT1) étant accouplée par l'intermédiaire d'un second accouplement ($F_2$) à la manière d'un ressort et de raideur élastique ($c_2$) à une seconde partie (ZGT2) de l'élément intermédiaire, qui est montée en tant qu'organe entraîné dans la draîne de transmission de force à l'araignée (SE21), avec $c_1 < c_2$;

- qu'un porte-cliquets (52) comportant des cliquets de blocage (290) pouvant être déployés radialement est monté mobile longitudinalement et en sollicite élastiquement sur l'élément intermédiaire (ZG), les cliquets de blocage (290) étant déployés dans le cas d'une seconde course relative ($h_2$), qui a lieu en fonction de la force de traction, de la première partie (ZGT1) de l'élément intermédiaire par rapport à la seconde partie (ZGT2) de cet élément, tout en faisant dévier le second accouplement ($F_2$) élastique à la manière d'un ressort et étant bloqués dans leur position déployée tant que la force de traction accrue est présente entre la partie d'entraînement (SE11) et l'élément intermédiaire (ZG);
- que des plaques de guidage (10) des éléments de commande (SE) sont disposées en tant que butées dans la voie de déplacement des cliquets de blocage (290) déployés;
- que la première partie (ZGT1) de l'élément intermédiaire peut être subdivisée, au moyen de l'accouplement amovible à barres (SK4) sous la forme d'un accouplement déployable, en un premier corps de séparation libéré (TK1), qui reste sur la partie d'entraînement, et en un second corps de séparation (TK2), qui peut être bloqué contre tout déplacement ultérieur au moyen des cliquets de blocage (290), un poussoir de verrouillage (49) étant monté sur le second corps de séparation maintenant normalement l'accouplement déployable entre les premier et second corps de séparation (TK1, TK2) et, dans le cas d'une troisième course relative ($h_3$) entre le second corps de séparation (TK2) d'une part et le porte-cliquets (52) ainsi que la seconde partie (ZTG2) de l'élément intermédiaire d'autre part, étant entraîné dans une position déverrouillée, dans laquelle les éléments d'accouplement (18, 18.1) de l'accouplement déployable (SK) libèrent le premier corps de séparation (TK1), et
- que la troisième course relative ($h_3$) est déclenchée lorsque les cliquets de blocage déployés (290) sont empêchés de se déplacer axialement davantage, par les butées des plaques de guidage (10).

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16

FIG 16A

FIG 16B

FIG 17

FIG 18

FIG 19

FIG 20

FIG 21

FIG 22

FIG 23

FIG 24

FIG 25